# EUROPÄISCHE PATENTSCHRIFT

(11) **EP 1 362 762 B1**
(45) Veröffentlichungstag und Bekanntmachung des Hinweises auf die Patenterteilung: **04.07.2007**
(21) Anmeldenummer: 03010079.6
(22) Anmeldetag: 03.05.2003
(51) Int. Cl.: B62B 3/06

(54) **Flurförderzeug**
Industrial truck
Chariot de manutention

(30) Priorität: 14.05.2002 DE 10221312
(43) Veröffentlichungstag der Anmeldung: 19.11.2003
(73) Patentinhaber: Jungheinrich Aktiengesellschaft, 22047 Hamburg (DE)
(72) Erfinder: Lohmann, Helmut, 27404 Gyhum Nartum (DE)
(74) Vertreter: Hauck Patent- und Rechtsanwälte

(56) Entgegenhaltungen:
- DE-A1- 10 013 079
- DE-U1- 8 904 166
- DE-U1- 29 918 832

## Beschreibung

Die Erfindung bezieht sich auf einen Rahmen für das Antriebsteil eines Flurförderzeugs, insbesondere eines Hubwagens nach dem Oberbegriff des Patentanspruchs 1.

Ein Rahmen der gattungsgemäßen Art ist aus DE 299 18 832 U1 (beinhaltet die Merkmale des Oberbegriffs des Anspruchs 1) bekannt geworden. Der Rahmen ist zur Aufnahme von Kräften einer Hubvorrichtung und zur Aufnahme von Kräften mindestens eines Rades des Flurförderzeugs und seines Antriebs vorgesehen, wobei er zwei senkrecht angeordnete und parallel zur Längsachse des Flurförderzeugs ausgerichtete tragende Platten aufweist, die in Querrichtung des Flurförderzeugs voneinander beabstandet sind.

Nachteilig bei herkömmlichen Antriebsrahmen ist, dass sie aus einer Reihe von Einzelteilen bestehen, die miteinander verschweißt sind. Die große Anzahl von Schweißbaugruppen und damit auch die erhebliche Schweißnahtlänge führt zu einem nicht unbeträchtlichen Herstellungsaufwand.

Der Erfindung liegt die Aufgabe zugrunde, einen Rahmen für den Antriebsteil eines Flurförderzeugs zu schaffen, der aus einer Mindestanzahl von Einzelteilen besteht und mit einem reduzierten Aufwand gefertigt werden kann bei gleichzeitiger Steigerung der Qualität.

Diese Aufgabe wird durch die Merkmale des Patentanspruchs 1 gelöst.

Der erfindungsgemäße Rahmen besteht aus einer aus einem flachen Blechzuschnitt bugartig geformten nach vorn weisenden Schürze, die die untere vordere und seitliche Sichtfläche des Flurförderzeugs bildet und aus einer aus einem einteiligen flachen Blechzuschnitt geformten Rückwand, die mit der Schürze verbunden ist. Die Rückwand dient als Trageinheit für Anbau- und Einbauteile im Antriebsteil. Sie weist durch Abkantungen geformte obere und Seitenabschnitte auf, welche zugleich Sichtflächenabschnitte des Gehäuses für das Antriebsteil bilden. Die beschriebenen Teile zusammen mit speziellen Trägern, die vorzugsweise aus dickeren Blechen geformt sind, und die mit der Rückwand verschweißt werden, reduzieren die Gesamtzahl der durch Schweißung zu verbindenden Teile auf ein sehr geringes Maß, wodurch der Befestigungsaufwand beträchtlich reduziert wird. Durch Verringerung der Schweißnahtanzahl und der Schweißnahtlängen wird auch die Qualität bei geringen Herstellungskosten gesteigert.

Oberer Abschnitt und Seitenabschnitte sind nicht nur einfach abgekantet, sondern durchgehend geformt, wodurch sie der Rückwand eine erhebliche Stabilität verleihen. Oberer Abschnitt und/oder Seitenabschnitte können an den freien Kanten nach innen und unten bzw. zur Seite hin gebogene abgekantete Abschnitte aufweisen, die ebenfalls durchgehend sein können und die Stabilität des Rahmens weiterhin erhöhen.

Die Stabilität der Rückwand wird auch dadurch erhöht, dass die Rückwand erhabene bzw. vertiefte Flächenabschnitte aufweist, die wie Sicken zur Versteifung des Bleches führen. Nach einer Ausgestaltung der Erfindung kann ein vertiefter Flächenabschnitt auf der Rückseite der Rückwand einen Aufnahmekanal für Kabel bilden, die durch eine Öffnung in der Rückwand nach vorn geführt sind.

Nach einer anderen Ausgestaltung der Erfindung können im erhabenen bzw. vertieften Flächenabschnitt Einprägungen und Ausnehmungen geformt sein für die Anbringung von Clipmuttern oder dergleichen. An den Clipmuttern können Einbauteile auf einfache Weise befestigt werden, wobei die Baulänge des Rahmens durch die Muttern nicht vergrößert wird, da sie, wie erwähnt, in einem vertieften Teil untergebracht sind.

In der Rückwand können ferner nach einer Ausgestaltung der Erfindung Öffnungen vorgesehen sein für die teilweise Aufnahme von Aggregaten und Einbauteilen. Dadurch wird der Freiraum ausgenutzt, der bis zum Anschluss des Lastteils besteht. Der Abstand zum Lastteil ist zwar relativ gering, ermöglicht jedoch einen gewissen Überstand von Einbauteilen über die Rückwand, ohne dass es zu einer schädlichen Berührung kommt.

Nach einer anderen Ausgestaltung der Erfindung weist der obere Abschnitt zwei beabstandete Unterabschnitte auf, die durch einen nach vorn gebogenen mittigen Steg verbunden sind, unter dem eine Öffnung in der Rückwand geformt ist für die teilweise Aufnahme eines Hubzylinders. Der Hubzylinder dient bekanntlich für den Freihub des Lastteils einschließlich der Betätigung der Hubkinematik für die Radarme.

Nach einer anderen Ausgestaltung der Erfindung sind durch Umbiegung der Rückwand am unteren Ende nach vorn zwei flügelartige Bodenabschnitte gebildet, die zwischen sich einen Freiraum belassen. Auf den Bodenabschnitten können entsprechende Teile abgesetzt werden. Der Freiraum zwischen den Bodenabschnitten dient zur Aufnahme von Antriebsteilen und eines Antriebsrades.

Durch Abkantung von den Bodenabschnitten können nach unten weisende Versteifungsstege gebildet sein.

Zur Anbringung des Fahrantriebs und/oder der Hubvorrichtung sind entsprechende Vorkehrungen zu treffen. Eine unmittelbare Anbringung an der Rückwand ist nicht zweckmäßig. Daher sieht die Erfindung Tragabschnitte vor, die an der Vorderseite der Rückwand angeschweißt sind. Vorzugsweise sind die Tragabschnitte auf gegenüberliegenden Seiten einer oberen mittigen Öffnung angeordnet. Außerdem sind die Tragabschnitte einteilig auf jeder Seite der Öffnung. Sie werden vorzugsweise aus flachen Blechzuschnitten geformt, die jedoch eine größere Dicke aufweisen als der Zuschnitt für die Rückwand.

Ein Ausführungsbeispiel wird nachfolgend anhand von Zeichnungen näher erläutert.
- Fig. 1: zeigt perspektivisch einen Rahmen nach der Erfindung von vorn.
- Fig. 2: zeigt perspektivisch den Rahmen nach Fig. 1 von hinten.

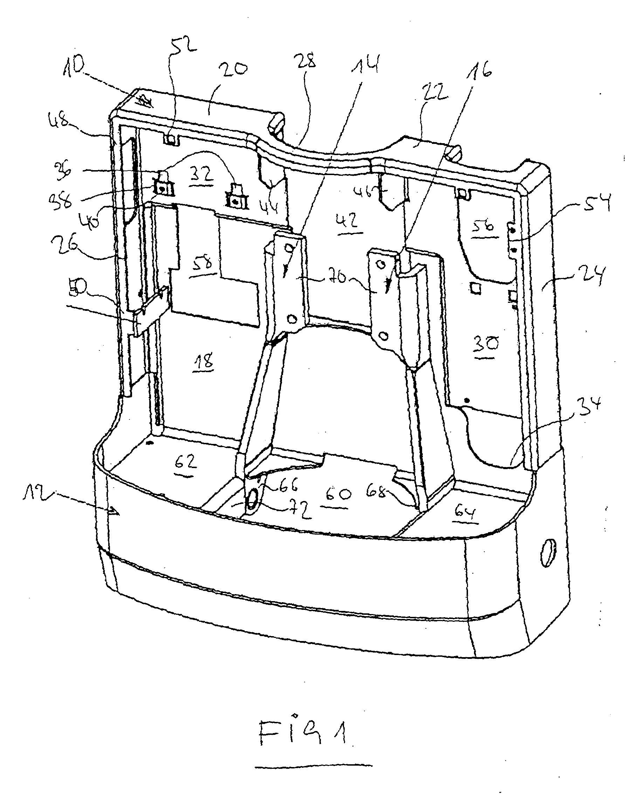

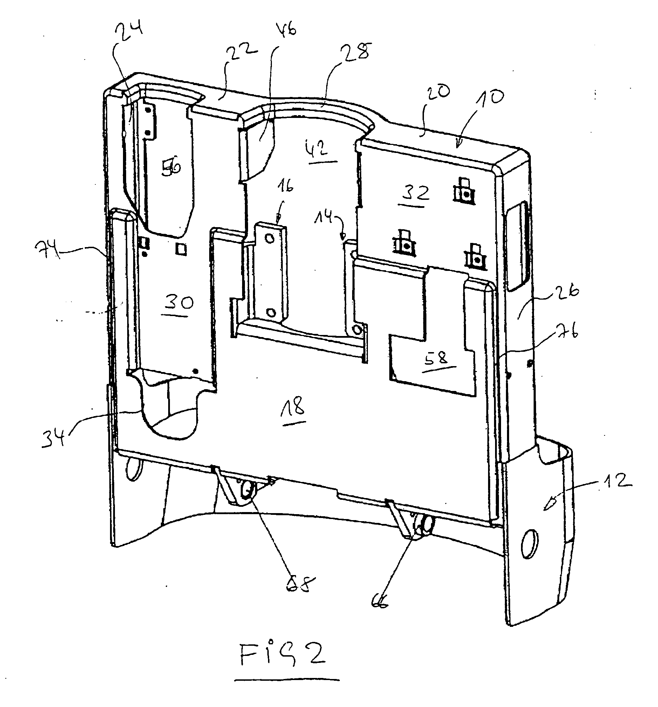

Der in den Figuren 1 und 2 dargestellte Rahmen besteht im Wesentlichen aus vier Einzelteilen, nämlich aus einer kastenartigen Rückwand 10, einer bugartigen Schürze 12 und zwei Tragteilen 14, 16, die an der Rückwand 10 vorn angeschweißt sind. Auf die einzelnen Bauteile sei nachfolgend näher eingegangen.

Die Rückwand 10 weist einen Rückwandabschnitt 18 auf, aus dessen Erstreckung heraus nach vorn flanschartig obere Abschnitte 20, 22 und Seitenabschnitte 24, 26 annähernd rechtwinklig abgebogen sind. Die Abschnitte 22, 24 einerseits und 20, 26 andererseits gehen ineinander über, und die Abschnitte 20, 22 sind durch einen nach vorn gebogenen kreisbogenförmigen Steg 28 miteinander verbunden. Die beschriebenen Abschnitte 18 bis 28 sind einteilig aus einem flachen Blechzuschnitt geformt und durch entsprechende Biege- und Pressvorgänge in die gezeigte Form gebracht. Die abgebogenen Abschnitte 22 bis 26 führen zu einer erheblichen Versteifung der Rückwand 10. Die Rückwandfläche 18 wird durch nach vorn erhabene Abschnitte 30, 32 versteift, die somit Sicken bilden. Auf der Rückseite (Fig. 2) bildet der Abschnitt 30 einen Kanal für nicht gezeigte Kabel, die von der Batterie im Lastteil kommend in dem Kanal nach unten geführt werden können zur Öffnung 34 nach vorn zwecks Verbindung mit dem Fahrantrieb und der Hubvorrichtung. Im Abschnitt 32 sind zwei Ausnehmungen 36 zu erkennen, welche von brückenartigen Ausprägungen 38 überbrückt sind, welche eine Clipmutter oder dergleichen aufnehmen können, wie bei 40 gezeigt. Die Clipmuttern dienen zur Befestigung eines Bauteils (nicht gezeigt).

Unterhalb des Steges 28 ist eine rechteckige Öffnung 42 geformt, welche zur teilweisen Aufnahme eines nicht gezeigten Hubzylinders dient. Unterhalb des Steges 28 zu beiden Seiten der Öffnung 42 sind nach vorn gebogene Lappen 44, 46 zu erkennen, die ebenfalls einer Versteifung dienen. Es bleibt noch nachzutragen, dass an den freien Kanten der Abschnitte 20 bis 22 eine Umbiegung 48 geformt ist, welche sich über die gesamte Länge bzw. Höhe der Abschnitte 20 bis 26 erstreckt, um diese zusätzlich zu versteifen. Auch die Umbiegung 48 ist durchgehend geformt. Die Umbiegung weist Ansätze auf, wie bei 50, 52 und 54 gezeigt zur Anbringung von Einbauteilen. Unterhalb des oberen Abschnitts 22 ist eine Öffnung 56 und unterhalb des Abschnitts 32 eine Öffnung 58 geformt, welche zur teilweisen Aufnahme von Bauteilen dienen, die im Antriebsteil an- bzw. untergebracht sind.

Am unteren Ende des Rückwandabschnitts 18 sind zu beiden Seiten einer mittigen Öffnung 60 flügelartige Bodenabschnitte 62, 64 durch Abkantung geformt. Die Bodenabschnitte 62, 64 weisen schlitzartige Öffnungen auf für den Durchtritt von Lagerabschnitten 66, 68, die einteilig mit den Trägerteilen 14, 16 geformt sein können. Die Trägerteile 14, 16 sind fest in den schlitzartigen Öffnungen der Bodenabschnitte 62, 64 und an der Rückwandfläche 18 verschweißt, und zwar im oberen Bereich zu beiden Seiten der Öffnung 42. Die Trägerteile 14, 16 sind spiegelbildlich gleich. Sie weisen mit Löchern versehene Befestigungsabschnitte 70 auf, an denen die Antriebsvorrichtung (nicht gezeigt) angebracht ist. An den Lagerbauteilen 66, 68 wird die Hubkinematik für die Radarme (nicht gezeigt) angelenkt.

Die Bodenabschnitte 62, 64 weisen nach unten abgekantete Versteifungsstege auf, von denen in Fig. 1 nur einer bei 72 zu erkennen ist.

Die Schürze 12 ist mit den vorderen und seitlichen Kanten der Bodenabschnitte 62, 64 und mit den unteren Kanten der Seitenabschnitte 24, 26 und den unteren Seitenkanten des Rückwandabschnitts 18 verschweißt. Sie bildet nach vorn und zur Seite im unteren Bereich die Sichtfläche des Antriebsteils. Die Seitenabschnitte 24, 26 und die oberen Abschnitte 20, 22 bilden ebenfalls Sichtflächen für das Antriebsteil. Sicken 74, 76 verstärken nicht nur die Rückwandfläche 18, sondern dienen auch als Sicht- und Klemmschutz im Spalt zum Lastrahmen.

Wie erkennbar, führt die komplexe Ausprägung der Rückwand 12 zu einer sehr geringen Einzelteilzahl der Schweißbaugruppe unter Beibehaltung ihrer vollen Funktionsfähigkeit. Mit der Teilezahl reduziert sich auch die Schweißnahtanzahl sowie die Schweißnahtlängen in der Fertigung. Da die Herstellung stark werkzeuggebunden ist, steigert sich die Qualität bei reduzierten Herstellungskosten. Schließlich ermöglicht die besondere Ausbildung der Rückwand durch die Anbringungsweise von Einbauteilen an der Rückwand eine merkliche Verkürzung der Gesamtlänge des Antriebsteils.

## Patentansprüche

1. Rahmen für das Antriebsteil eines Flurförderzeugs, insbesondere eines Hubwagens, der u.a. als Träger einer Hubvorrichtung und/oder eines Fahrantriebs dient, **gekennzeichnet durch** folgende Merkmale:
- eine aus einem flachen Blechzuschnitt bugartig geformte nach vom weisende Schürze (12) und
- eine aus einem flachen Blechzuschnitt geformte, mit der Schürze (12) verbundene einteilige Rückwand (10) als Trageinheit für Anbau- und Einbauteile im Antriebsteil, die **durch** Abkantung einen oberen Abschnitt (20, 22) und Seitenabschnitte (24, 26) aufweist, welche zugleich Sichtflächenabschnitte des Gehäuses für das Antriebsteil bilden.

2. Rahmen nach Anspruch 1, **dadurch gekennzeichnet, dass** obere und Seitenabschnitte (20 bis 26) durchgehend aus der Rückwandfläche (18) herausgebogen sind.

3. Rahmen nach Anspruch 1 oder 2, **dadurch gekennzeichnet, dass** der obere Abschnitt (20, 22) und/oder die Seitenabschnitte (24, 26) an den freien Kanten nach innen und unten abgebogene Abschnitte (48) aufweisen, die vorzugsweise durchgehend sind.

4. Rahmen nach einem der Ansprüche 1 bis 3, **dadurch gekennzeichnet, dass** die Rückwand (10) erhabene bzw. vertiefte Flächenabschnitte (30, 32, 74, 76) aufweist.

5. Rahmen nach Anspruch 4, **dadurch gekennzeichnet, dass** ein vertiefter Flächenabschnitt (30) auf der Rückseite der Rückwand (18) einen Aufnahmekanal für Kabel bildet, die durch eine Öffnung (34) in der Rückwand (18) nach vom geführt werden.

6. Rahmen nach Anspruch 3 oder 4, **dadurch gekennzeichnet, dass** in einem erhabenen bzw. vertieften Flächenabschnitt Einprägungen und Ausnehmungen (36, 38) geformt sind für die Anbringung von Clipmuttern (40) oder dergleichen.

7. Rahmen nach einem der Ansprüche 1 bis 6, **dadurch gekennzeichnet, dass** in der Rückwand (18) Öffnungen (56, 58) vorgesehen sind für die teilweise Aufnahme von Aggregaten und Einbauteilen.

8. Rahmen nach einem der Ansprüche 1 bis 7, **dadurch gekennzeichnet, dass** der obere Abschnitt zwei beabstandete Unterabschnitte (20, 22) aufweist, die durch einen nach vom gebogenen mittigen Steg (28) verbunden sind, unter dem eine Öffnung (42) in der Rückwand (18) geformt ist für die teilweise Aufnahme eines Hubzylinders.

9. Rahmen nach einem der Ansprüche 1 bis 8, **dadurch gekennzeichnet, dass** durch Umbiegung der Rückwand (10) am unteren Ende nach vom zwei flügelartige Bodenabschnitte (62, 64) gebildet sind, die zwischen sich einen Freiraum (60) belassen.

10. Rahmen nach Anspruch 9, **dadurch gekennzeichnet, dass** durch Abbiegung von den Bodenabschnitten (62, 64) nach unten weisende Versteifungsstege (72) gebildet sind.

11. Rahmen nach einem der Ansprüche 8 bis 10, **dadurch gekennzeichnet, dass** unterhalb des Steges (28) aus der Rückwand (10) nach vom abgebogene Versteifungsabschnitte (44, 46) gebildet sind.

12. Rahmen nach einem der Ansprüche 1 bis 11, **dadurch gekennzeichnet, dass** zwei aus einem Blechzuschnitt geformte Tragabschnitte (14, 16) für einen Fahrantrieb und/oder eine Hubvorrrichtung an der Vorderseite der Rückwand (18) angeschweißt sind.

13. Rahmen nach Anspruch 8 und 12, **dadurch gekennzeichnet, dass** die Tragabschnitte auf beiden Seiten neben der Öffnung (42) angeordnet sind.

14. Rahmen nach einem der Ansprüche 1 bis 13, **dadurch gekennzeichnet, dass** an der Rückwand (18) und/oder den Bodenabschnitten (62, 64) Koppelabschnitte (66, 68) für eine Hubkinematik geschweißt sind.

15. Rahmen nach Anspruch 12 und 14, **dadurch gekennzeichnet, dass** jeweils ein Tragabschnitt und ein Koppelabschnitt einteilig aus einem Blechzuschnitt oder einteilig als Schmiedeteil geformt sind.

16. Rahmen nach einem der Ansprüche 3 bis 15, **dadurch gekennzeichnet, dass** an die abgekanteten Abschnitte (48) Ansätze geformt sind für die Anbringung von Anbauteilen.

## Claims

1. A frame for the drive unit of an industrial truck, particularly a stacker lift truck which, inter alia, serves as a carrier of a lifting device and/or travel drive, **characterized by** the following features:
- a forward-facing apron (12) formed in the shape of a bow from a cut-to-size flat sheet metal piece and
- a one-piece rear wall (10) formed from a cut-to-size flat sheet metal piece connected to the apron (12) as a carrier unit for attachment and installation parts in the drive unit, which is chamfered and, as a result, has an upper portion (20, 22) and lateral portions (24, 26) which also define visible surface portions of the casing for the drive unit.

2. The frame as claimed in claim 1, **characterized in that** upper and lateral portions (20 trough 26) are continuously bent out of the rear wall surface (18).

3. The frame as claimed in claim 1 or 2, **characterized in that** the upper portion (20, 22) and/or the lateral portions (24, 26), at the free edges, have inwardly and downwardly bent portions (48) which preferably are continuous.

4. The frame as claimed in any one of claims 1 to 3, **characterized in that** the rear wall (10) has raised or recessed surface portions (30, 32, 74, 76).

5. The frame as claimed in claim 4, **characterized in that** a recessed surface portion (30), at the back of the rear wall (18), defines a reception channel for cables which are passed forwards through an opening (34) in the rear wall (18).

6. The frame as claimed in claim 3 or 4, **characterized in that** impressions and recesses (36, 38) are formed in a raised or recessed surface portion to mount clip nuts (40) or the like therein.

7. The frame as claimed in any one of claims 1 to 6, **characterized in that** the rear wall (18) has provided therein openings (56, 58) to partially receive units and installation parts.

8. The frame as claimed in any one of claims 1 to 7, **characterized in that** the upper portion has two spaced sub-portions (20, 22) which are interconnected by a forwardly bent central web (28) under which an opening (42) is formed in the rear wall (18) to partially receive a lifting cylinder.

9. The frame as claimed in any one of claims 1 to 8, **characterized in that** the rear wall (10) is forwardly bent over at the lower end and, as a result, two wing-like bottom portions (62, 64) are formed which leave a clearance zone (60) between them.

10. The frame as claimed in claim 9, **characterized in that** downwardly facing stiffening webs (72) are formed by bending them off the bottom portions (62, 64).

11. The frame as claimed in any one of claims 8 to 10, **characterized in that** stiffening portions (44, 46) which are forwardly bent from the rear wall (10) are formed below the web (28).

12. The frame as claimed in any one of claims 1 to 11, **characterized in that** two carrier portions (14, 16) formed from a cut-to-size sheet metal piece for a travel drive and/or lifting device are welded to the front side of the rear wall (18).

13. The frame as claimed in claims 8 and 12, **characterized in that** said carrier portions are disposed at either side next to the opening (42).

14. The frame as claimed in any one of claims 1 to 13, **characterized in that** coupling portions (66, 68) for a kinemetic lifting device are welded to the rear wall (18) and/or bottom portions (62, 64).

15. The frame as claimed in claims 12 and 14, **characterized in that** a carrier portion and a coupling portion each are integrally formed from a cut-to-size sheet metal piece or are integrally formed as a forging.

16. The frame as claimed in any one of claims 3 to 15, **characterized in that** the chamfered portions (48) have lugs formed thereto to mount attachment parts thereon.

## Revendications

1. Cadre pour la partie d'entraînement d'un chariot de manutention, en particulier d'un chariot élévateur, qui sert entre autres de support d'un dispositif de levage et/ou d'un système de propulsion, **caractérisé par** les caractéristiques suivantes :
- un tablier (12) formé à la façon d'un nez à partir d'une découpe de tôle plate et dirigé vers l'avant,
- une paroi arrière (10) d'une seule pièce, formée à partir d'une découpe de tôle plate, reliée au tablier (12), comme unité porteuse pour des parties rapportées et intégrées dans la partie d'entraînement, qui présente par chanfreinage une partie supérieure (20, 22) et des parties latérales (24, 26), qui forment en même temps des sections de surfaces visibles du boîtier pour la partie d'entraînement.

2. Cadre selon la revendication 1, **caractérisé en ce que** des sections supérieures et des sections latérales (20 à 26) sont pliées de façon continue à partir de la surface de la paroi arrière (18).

3. Cadre selon la revendication 1 ou 2, **caractérisé en ce que** la section (20, 22) supérieure et/ou les sections latérales (24, 26) présentent des sections (48) pliées vers l'intérieur et vers le bas sur les arêtes libres, qui sont de préférence continues.

4. Cadre selon l'une quelconque des revendications 1 à 3, **caractérisé en ce que** la paroi arrière (10) présente des sections de surface (30, 32, 74, 76) en relief ou en creux.

5. Cadre selon la revendication 4, **caractérisé en ce qu'**une section de surface (30) en creux forme sur le côté arrière de la paroi arrière (18) un canal de logement pour des câbles qui sont guidés par une ouverture (34) dans la paroi arrière (18) vers l'avant.

6. Cadre selon la revendication 3 ou 4, **caractérisé en ce que** dans une section de surface en relief ou en creux sont formés des gaufrages et des évidements (36, 38) pour le logement d'écrous clips (40) ou similaires.

7. Cadre selon l'une quelconque des revendications 1 à 6, **caractérisé en ce que** dans la paroi arrière (18) sont prévues des ouvertures (56, 58) pour le logement partiel d'ensembles et de parties intégrées.

8. Cadre selon l'une quelconque des revendications 1 à 7, **caractérisé en ce que** la section supérieure présente deux sections inférieures (20, 22) espacées qui sont reliées par une barrette (28) centrée pliée vers l'avant, sous laquelle est formée une ouverture (42) dans la paroi arrière (18) pour le logement partiel d'un cylindre de levage.

9. Cadre selon l'une quelconque des revendications 1 à 8, **caractérisé en ce que** deux sections de fond (62, 64) de type aile, qui laissent un espace vide (60) entre elles, sont formées par cintrage de la paroi arrière (10) sur l'extrémité inférieure vers l'avant.

10. Cadre selon la revendication 9, **caractérisé en ce que** des barrettes de renforcement (72) dirigées vers le bas sont formées par le pliage à partir de sections du fond (62, 64).

11. Cadre selon l'une quelconque des revendications 8 à 10, **caractérisé en ce que** les sections de renfort (44, 46) pliées à partir de la paroi arrière (10) vers l'avant sont formées au dessous de la barrette (28).

12. Cadre selon l'une quelconque des revendications 1 à 11, **caractérisé en ce que** deux sections porteuses (14, 16) formées à partir d'une découpe de tôle pour un système de propulsion et/ou un dispositif de levage sont rapportées par soudage sur le côté avant de la paroi arrière (18).

13. Cadre selon les revendications 8 et 12, **caractérisé en ce que** les sections porteuses sont disposées sur les deux côtés à côté de l'ouverture (42).

14. Cadre selon l'une quelconque des revendications 1 à 13, **caractérisé en ce que** des sections de couplage (66, 68) pour une cinématique de levage sont soudées sur la paroi arrière (18) et/ou sur les sections de fond (62, 64).

15. Cadre selon les revendications 12 et 14, **caractérisé en ce qu'**à chaque fois une section porteuse et une section de couplage sont formées d'une seule pièce à partir d'une découpe de tôle ou d'une seule pièce comme sous la forme de pièce forgée.

16. Cadre selon l'une quelconque des revendications 3 à 15, **caractérisé en ce que** des embases sont formées au niveau des sections (48) repliées pour le placement de parties rapportées.
